# EUROPEAN PATENT APPLICATION

(11) **EP 3 563 672 A1**
(43) Date of publication of application: **06.11.2019**
(21) Application number: 18745274.3
(22) Date of filing: 30.01.2018
(51) Int. Cl.: A01G 25/02

(54) **EMITTER AND TUBE FOR DRIP IRRIGATION COMPRISING SAME**

(30) Priority: 30.01.2017 JP 2017014745
(71) Applicant: Enplas Corporation, Kawaguchi-shi, Saitama 332-0034 (JP)
(72) Inventor: YANAGISAWA, Kazuma, Kawaguchi-shi, Saitama 332-0034 (JP); TAKAHASHI, Atsushi, Kawaguchi-shi, Saitama 332-0034 (JP)
(74) Representative: J A Kemp LLP
(86) International application number: PCT/JP2018/002861
(87) International publication number: WO 2018/139663

(57) **Abstract**

The present invention aims to provide an emitter and a drip irrigation tube that can suppress the variations in the discharge amount of the liquid caused by pressure fluctuations of the liquid in the drip irrigation tube. The emitter of the present invention is to be disposed on an inner wall of a tube including a discharge port, for regulating discharge of irrigation liquid from an inside of the tube to an outside of the tube via the discharge port. The emitter includes an intake portion; a regulating unit; a discharge portion; and a flow path. The regulating unit includes a recess; and a film, the film is fixed in a state of covering an inner space of the recess, a region of the film covering the inner space of the recess is a diaphragm portion, the recess has a through hole inside thereof on its bottom surface, the through hole of the recess communicates with the discharge portion, the recess has a slit communicating with the through hole on its bottom surface, and an edge portion forming an upper surface-side opening of the through hole on the bottom surface of the recess, except for the slit, is a valve seat portion for the film. In a state where the emitter is disposed in the tube, when no liquid is present in the tube, the diaphragm portion of the film is not in contact with the valve seat portion, and when the liquid is present in the tube, the diaphragm portion of the film can be in contact with the valve seat portion in accordance with a pressure of the liquid. The diaphragm portion of the film comes into contact with an entire valve seat portion with a time difference.

## Description

### TECHNICAL FIELD

The present invention relates to an emitter and a drip irrigation tube including the same.

### BACKGROUND ART

In the cultivation of plants, drip irrigation is known. The drip irrigation method is a method in which a tube for drip irrigation is arranged in the soil, and irrigation liquids such as water and liquid fertilizer is dripped from the tube to the soil. In recent years, problems such as the desertification due to global warming and the depletion of water resources have arise, and the drip irrigation method has attracted particular attention because it is possible to minimize the consumption of irrigation liquids.

The drip irrigation tube usually includes a tube having a plurality of through holes through which irrigation liquid is discharged, and a plurality of emitters (also referred to as "drippers") for discharging irrigation liquid from each of the through holes. As a type of emitter, for example, an emitter used by being connected to the inner wall of the tube is known (for example, see Patent Literature 1).

The emitter includes an intake portion for taking in the liquid from the tube, a decompression flow path for flowing a liquid in the emitter while decompressing the liquid, and a regulating unit that regulates a discharge amount of the liquid, which has been flowed through the decompression flow path to be discharged from the tube via the emitter, in accordance with a pressure of the liquid in the tube. A diaphragm that deforms in response to pressure of the liquid in the tube is used as the regulating unit, and a film having elasticity such as a silicone rubber film or the like is used as the diaphragm.

Since the emitter can regulate the discharge amount in accordance with the pressure in the tube, for example, even when the pressure of the liquid flowing in the tube fluctuates or the pressure of the liquid differs depending on the position in the tube, it is possible to discharge the liquid without variation.

### Citation List

### Patent Literature

Patent Literature 1: JP 2010-046094 A

### SUMMARY OF INVENTION

### Technical Problem

However, there is a problem in that, while the emitter can maintain a discharge amount with little variation even when pressure fluctuation occurs if the pressure of the liquid in the tube is equal to or higher than a predetermined pressure, the discharge amount decreases within a range in which the pressure does not reach the predetermined pressure. In particular, in a case where drip irrigation is performed at a long distance using a long tube, the discharge amount is affected depending on the distance from the liquid feed pump. Specifically, for example, while the emitter can maintain a discharge amount without variation in the vicinity of the liquid feed pump for feeding the liquid to the tube, there is a possibility that the emitter cannot achieve a discharge amount equivalent to that in the vicinity of the liquid feed pump at a position away from the liquid feed pump.

It is therefore an object of the present invention to provide an emitter and a drip irrigation tube that can suppress the variations in the discharge amount of the liquid caused by pressure fluctuations of the liquid in the drip irrigation tube.

### Solution to Problem

In order to achieve the above object, the present invention provides an emitter to be disposed on an inner wall of a tube including a discharge port, for regulating discharge of irrigation liquid from an inside of the tube to an outside of the tube via the discharge port, including:
an intake portion for taking in the liquid in the tube;
a regulating unit that regulates a discharge amount of the liquid taken in;
a discharge portion for discharging the taken-in liquid via the discharge port of the tube; and
a flow path communicating the intake portion and the regulating unit, wherein
the regulating unit includes:
   a recess; and
   a film,
   the film is fixed in a state of covering an inner space of the recess,
   a region of the film covering the inner space of the recess is a diaphragm portion,
   the recess has a through hole on its bottom surface,
   the through hole of the recess communicates with the discharge portion,
   the recess has a slit communicating with the through hole on its bottom surface,
   an edge portion forming an upper surface-side opening of the through hole on the bottom surface of the recess, excluding the slit, is a valve seat portion for the film;
in a state where the emitter is disposed in the tube,
   when no liquid is present in the tube, the diaphragm portion of the film is not in contact with the valve seat portion, and
   when the liquid is present in the tube, the diaphragm portion of the film can be in contact with the valve seat portion in accordance with a pressure of the liquid; and
the diaphragm portion of the film comes into contact with an entire valve seat portion with a time difference.

The present invention also provides a drip irrigation tube including:
a tube; and
an emitter, wherein
the emitter is the emitter according to the present invention,
the tube includes a discharge port for discharging an irrigation liquid,
the emitter is disposed on an inner wall of the tube at a site including the discharge port, and
the discharge portion of the emitter and the discharge port of the tube correspond to each other.

### Advantageous Effects of Invention

According to the emitter and the drip irrigation tube of the present invention, it is possible to suppress the variations in the discharge amount of the liquid caused by the pressure fluctuations of the liquid in the drip irrigation tube. Therefore, for example, even when the drip irrigation is performed over a long distance or the condition of the pressure of the liquid feeding into the tube is changed, it is possible to perform the drip irrigation while suppressing the influence on the discharge amount.

### BRIEF DESCRIPTION OF DRAWINGS

[FIGs. 1A and 1B] FIGs. 1A and 1B are cross-sectional views each schematically showing a drip irrigation tube in Embodiment 1.
[FIGs. 2A and 2B] FIGs. 2A and 2B are perspective views of an emitter according to Embodiment 1.
[FIGs. 3A to 3C] FIGs. 3A to 3C are plan views of the emitter according to Embodiment 1.
[FIGs. 4A to 4C] FIGs. 4A to 4C are cross-sectional views of the emitter according to Embodiment 1.
[FIGs. 5A and 5B] FIGs. 5A and 5B are schematic diagrams illustrating the operation of the emitter according to Embodiment 1.
[FIG. 6] FIG. 6 is a plan view of an emitter according to Embodiment 2.
[FIG. 7] FIG. 7 is a cross-sectional view of an emitter according to Embodiment 3.
[FIGs. 8A and 8B] FIGs. 8A and 8B are cross-sectional views of an emitter according to Embodiment 4.
[FIG. 9] FIG. 9 is a cross-sectional view of another emitter according to Embodiment 4.
[FIGs. 10A and 10B] FIGs. 10A and 10B are cross-sectional views of another emitter according to Embodiment 5.

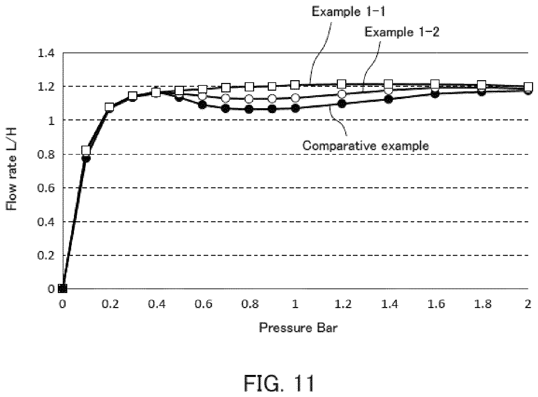

[FIG. 11] FIG. 11 is a graph showing the relationship between the pressure of the water in the tube and the discharge amount of the water discharged from the discharge port of the tube per hour in Examples.

### DESCRIPTION OF EMBODIMENTS

In the emitter of the present invention, for example, the shape of the upper surface-side opening of the through hole satisfies the following condition (1).
Condition (1): In the plane direction perpendicular to the axial direction of the recess, the length (L₁) in one direction passing through the axial center is longer than the length (L₂) in the direction orthogonal to the one direction passing through the axial center.
   In the emitter of the present invention, for example, the shape of the upper surface-side opening of the recess does not satisfy the condition (1).
   In the emitter of the present invention, for example, in the condition (1), when the length (L₂) is assumed to be 1, a relative value of the length (L₁) is greater than 1 and is equal to or less than 3. Preferably, the ratio (L₁: L₁) between the length (L₁) and the length (L₂) is 1.1 to 3:1.
   In the emitter of the present invention, for example, the shape of the upper surface-side opening of the through hole is an ellipse.
   In the emitter of the present invention, for example, the shape of the upper surface-side opening of the recess satisfies the following condition (2).
Condition (2): In the plane direction perpendicular to the axial direction of the recess, the length (L₁) in one direction passing through the axial center is longer than the length (L₂) in the direction orthogonal to the one direction passing through the axial center.
   In the emitter of the present invention, for example, the shape of the upper surface-side opening of the through hole does not satisfy the condition (2).
   In the emitter of the present invention, for example, in the condition (2), when the length (L₂) is assumed to be 1, a relative value of the length (L₁) is greater than 1 and is equal to or less than 3. Preferably, the ratio (L₂: L₂) between the length (L₁) and the length (L₂) is 1.1 to 3:1.
   In the emitter of the present invention, for example, the shape of the upper surface-side opening of the recess is an ellipse.
   In the emitter of the present invention, for example, the upper surface-side opening of the recess and the upper surface-side opening of the through hole satisfy the following condition (3).
Condition (3): In the axial direction of the recess, the center of the upper surface-side opening of the recess and the center of the upper surface-side opening of the through hole are deviated.
   In the emitter of the present invention, for example, the upper surface-side opening of the recess and the upper surface-side opening of the through hole satisfy the following condition (4).
Condition (4): In the plane direction perpendicular to the axial direction of the recess, the upper surface-side opening of the recess and the upper surface-side opening of the through hole are arranged non-parallel to each other.

In the emitter of the present invention, for example, the upper surface-side opening of the recess is inclined.

In the emitter of the present invention, for example, the upper surface-side opening of the through hole is inclined.

In the emitter of the present invention, for example, on the bottom surface of the recess, the periphery of the upper surface-side opening of the through hole may protrude upward. Hereinafter, the protruding region is also referred to as a "cylindrical region" around the through hole. In this case, in the cylindrical region, for example, the upper surface of the protrusion has the slit in a part thereof, and the inner edge portion of the upper surface of the protrusion excluding the slit is a valve seat portion for the film.

The emitter and the drip irrigation tube of the present invention are characterized in that the diaphragm portion of the film comes into contact with the entire valve seat portion in the cylindrical region with a time difference, as described above.

The key factor of the emitter and the drip irrigation tube of the present invention is that the diaphragm portion of the film comes into contact with the entire valve seat portion in the cylindrical region with a time difference, and other configurations are not particularly limited. In addition, in the emitter and the drip irrigation tube of the present invention, the way of contacting with a time difference is not particularly limited as long as the diaphragm portion of the film can come into contact with the entire valve seat portion in the cylindrical region with a time difference.

As aspects of the emitter of the present invention of performing the contact with a time difference as described above, a first emitter, a second emitter, a third emitter, a fourth emitter, and a fifth emitter may be given, for example. The first emitter, the second emitter, the third emitter, the fourth emitter, and the fifth emitter of the present invention will be described below. It is to be noted that each of the emitters of the present invention is merely an example, and the emitter of the present invention is not limited thereto. In addition, regarding the description of the respective emitters of the present invention, reference can be made to each other unless otherwise stated.

### (First emitter)

In the first emitter of the present invention, the shape of the upper surface-side opening of the through hole satisfies the following condition (1).
Condition (1): In the plane direction perpendicular to the axial direction of the recess, the length (L₁) in one direction passing through the axial center is longer than the length (L₂) in the direction orthogonal to the one direction passing through the axial center.

The first emitter of the present invention only requires satisfying the condition (1), and other configurations, conditions, and the like are not limited in any way.

An embodiment of the first emitter and the first drip irrigation tube including the same of the present invention will be described with reference to the drawings. The first emitter and the drip irrigation tube of the present invention are not limited or restricted in any way by the embodiment described below. In each of the drawings, identical parts are indicated with identical reference signs. In each of the drawings, for convenience in explanation, the structure of each component may be appropriately simplified, and the size, the ratio, and the like of components are not limited to the conditions in the drawing.

In each of the drawings, for convenience sake, "the axial direction of the tube" denotes the direction connecting the openings at both ends of the tube and "the vertical direction of the tube" denotes the direction perpendicular to the axial direction and also the plumb direction when the tube is placed on the table, unless otherwise stated. In each of the drawings, for convenience sake, the emitter is shown in a state where it is disposed on the inner wall in the downward direction of the tube, unless otherwise stated. In each of the drawings, for convenience sake, as to the vertical direction of the emitter, the opening side of the recess (the side on which the film is disposed) is referred to as the upward direction, the bottom surface side of the recess is referred to as the downward direction, the upward direction of the emitter is also referred to as the front surface side of the emitter, and the downward direction of the emitter is also referred to as the back surface side of the emitter, unless otherwise stated. The height of the emitter denotes the length in the vertical direction, the length of the emitter denotes the length in the longitudinal direction (direction along the axial direction of the tube), and the width of the emitter denotes the length in the direction perpendicular to the vertical direction and the longitudinal direction (also referred to as the lateral direction or the width direction). Hereinafter, the same applies to other embodiments.

### [Embodiment 1]

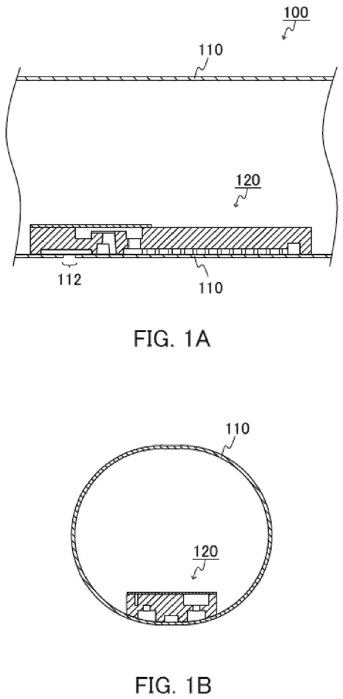

FIGs. 1A and 1B are schematic views each showing the state where the first emitter is disposed in the first drip irrigation tube. FIG. 1A is a cross-sectional view in the axial direction and the vertical direction of the tube, and FIG. 1B is a cross-sectional view in the direction perpendicular to the axial direction of the tube. In the emitter of Embodiment 1, the bottom surface of the recess has the cylindrical region around the upper surface-side opening of the through hole. The present invention, however, is not limited thereto, and the bottom surface of the recess may not have the cylindrical region.

Hereinafter, the configurations of the first drip irrigation tube and the first emitter will be described, and thereafter the functions and effects thereof will be described.

A drip irrigation tube 100 will be described. As shown in FIG. 1, the drip irrigation tube 100 includes a tube 110 and a plurality of emitters 120, and the emitters 120 are disposed inside the tube 110 on the inner wall thereof.

The tube 110 is a hollow tube for allowing an irrigation liquid to flow therethrough. The material for the tube 110 is not particularly limited, and is, for example, polyethylene. The tube wall of the tube 110 has a plurality of through holes 112 at predetermined intervals (e.g., 200 to 500 mm) in the axial direction of the tube 110. The through hole 112 is a discharge port 112 for discharging the liquid inside the tube 110 to the outside of the tube 110. The shape and size of the hole of the discharge port 112 are not particularly limited as long as the liquid can be discharged. The shape of the hole of the discharge port 112 is, for example, a circle, and the diameter thereof is, for example, 1.5 mm.

A plurality of emitters 120 are disposed on the inner wall of the tube 110 at positions corresponding to the discharge ports 112. The shape and area of the cross-section in the direction perpendicular to the axial direction of the tube 110 is not particularly limited as long as the emitter 120 can be disposed therein.

In use of the drip irrigation tube 100, the emitter 120 only is required to be disposed so as not to be detached from the tube 110, for example. The emitter 120 is connected to the tube 110, for example, and the drip irrigation tube 100 can be produced by connecting a back surface 138 of the emitter 120 to the inner wall of the tube 110, for example. The method of connecting the tube 110 and the emitter 120 is not particularly limited, and may be, for example, welding of a resin material constituting the emitter 120 or the tube 110, bonding with an adhesive, or the like. In the drip irrigation tube 100, the discharge port 112 may be formed, for example, before or after disposing the emitter 120 in the tube 110.

Next, the emitter 120 will be described. Here, the front surface side of the emitter 120 is the side of the emitter 120 facing the inner space of the tube 110 when it is disposed in the tube 110, and the back surface side of the emitter 120 is the side facing the inner wall of the tube 110 when it is disposed in the tube 110. Hereinafter, the same applies to other embodiments.

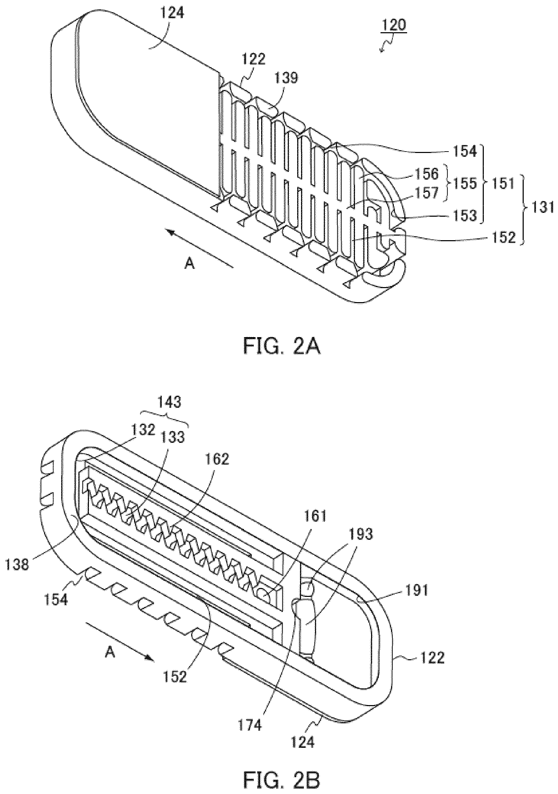

FIGs. 2A and 2B are perspective views each schematically showing the emitter 120. FIG. 2A is a perspective view of the emitter 120 seen from the front surface 139 side, and FIG. 2B is a perspective view of the emitter 120 seen from the back surface 138 side. For convenience sake, in the longitudinal direction of the emitter 120, the side on which a film 124 is not disposed is referred to as an upstream side, and the side on which the film 124 is disposed is referred to as a downstream side. The upstream side and downstream side are not intended to indicate the flow of liquid in the emitter 120, and are merely definitions for convenience in explanation. In each of FIGs. 2A and 2B, the direction of the emitter 120 is indicated by the arrow A, and the shaft side of the arrow indicates the upstream side and the arrowhead side of the arrow indicates the downstream side (hereinafter, the same applies).

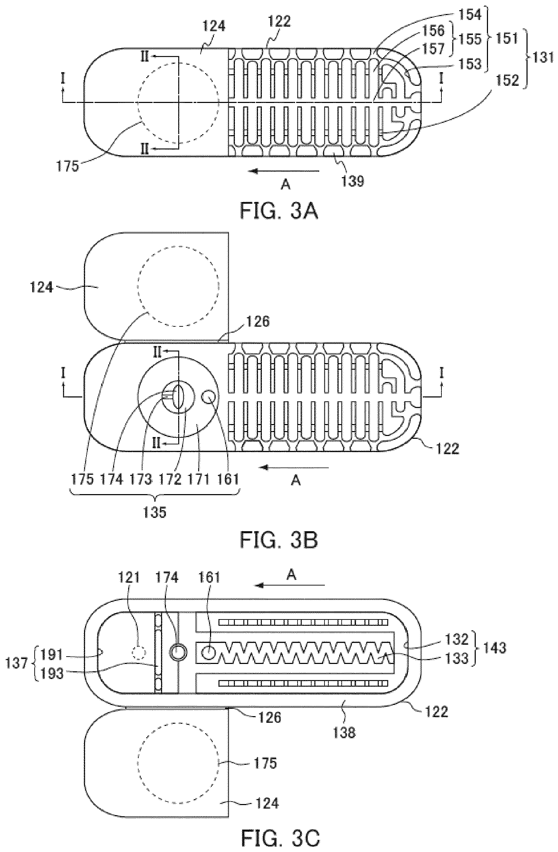

FIGs. 3A to 3C are plan views each schematically showing the emitter 120. FIG. 3A is a top view (plan view of the front surface side) of the emitter 120, and FIGs. 3B and 3C are schematic views each showing the emitter 120 in a state in which the film 124 is connected to an emitter body 122 excluding the film 124 via a hinge portion 126 before the film 124 is disposed on the emitter body 122. Specifically, FIG. 3B is a plan view seen from the front surface side, and FIG. 3C is a plan view seen from the back surface side.

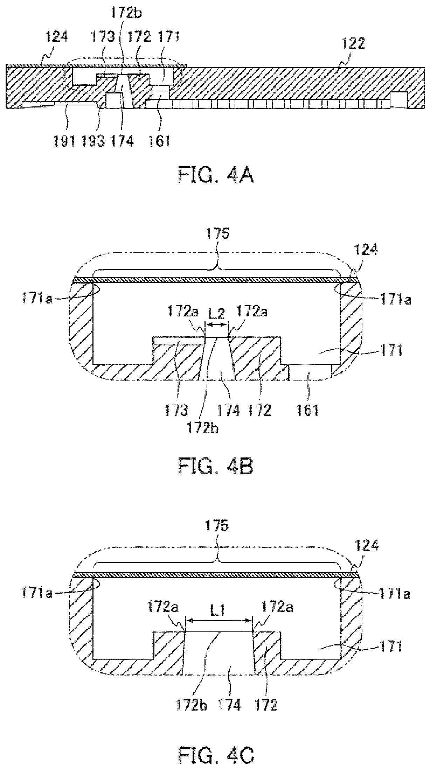

FIGs. 4A to 4C are cross-sectional views each schematically showing the emitter 120. FIG. 4A is a cross-sectional view taken along the line I-I in FIG. 3A, FIG. 4B is a partial cross-sectional view of the region surrounded by the dotted line in FIG. 4A, i.e., a partial cross-sectional view in the vicinity of a regulating unit 135, and FIG. 4C is a partial cross-sectional view taken along the line II-II in FIG. 3A (partial cross-sectional view in the vicinity of the regulating unit 135).

As shown in FIGs. 1A and 1B, the emitter 120 is disposed inside the tube on the inner wall thereof in a state of covering the discharge port 112. The overall shape of the emitter 120 is not particularly limited as long as, for example, the emitter 120 can be in close contact with the inner wall of the tube 110 to cover the discharge port 112. In the present embodiment, the planar shape of the emitter 120 is, for example, a substantially rectangular shape with four corners chamfered by R. The back surface 138 of the emitter 120 being in contact with the inner wall of the tube 110 includes a protrusion in the cross-section in the direction perpendicular to the axial direction of the tube, and the protrusion has a substantially arc shape toward the inner wall of the tube 110 so as to be along the inner wall of the tube 110. The overall size of the emitter 120 is not particularly limited, and for example, the length in the longitudinal direction may be 25 mm, the length in the lateral direction may be 8 mm, and the height in the vertical direction may be 2.5 mm.

The emitter 120 is formed by disposing the film 124 on the emitter body 122. The film 124 and emitter body 122 may be connected to each other via the hinge portion 126, for example, as shown in FIGs. 3A and 3B, or the emitter body 122 and film 124 may be integrally molded. In this case, the film 124 may be rotated to the emitter body 122 side about the hinge portion 126 as an axis and may be disposed and fixed on the emitter body 122. The hinge portion 126 may be cut and removed, for example, after the film 124 is fixed to the emitter body 122. The thicknesses of the film 124 and the hinge portion 126 are not particularly limited, and are, for example, the same. The thickness of the film 124 is not particularly limited, and is, for example, 0.3 mm.

The emitter body 122 and the film 124 may be formed separately, and then the film 124 may be disposed and fixed on the emitter body 122, for example. The method of fixing the film 124 to the emitter body 122 is not particularly limited, and may be, for example, welding of a material constituting the emitter body 122 or the film 124, bonding with an adhesive, or the like. The site of the film 124 to be fixed to the emitter body 122 is not particularly limited, and is, for example, a region outside the diaphragm portion of the film 124.

The emitter body 122 preferably has flexibility, for example, and is preferably formed of a flexible material. Since the film 124 includes a diaphragm portion, as will be described below, the film 124 is preferably flexible and formed of a flexible material. The emitter body 122 and the film 124 may be formed of the same material, or may be formed of different materials, for example, and are preferably formed of the same material when they are integrally formed as described above. The flexible material may include, for example, one type or two or more types. The flexible material may be, for example, a resin, a rubber, or the like, and the resin may be, for example, polyethylene, silicone, or the like. The flexibility of the emitter body 122 or the film 124 can be adjusted, for example, by the use of an elastic material such as an elastic resin. The method of adjusting the flexibility is not particularly limited, and includes, for example, selection of an elastic resin, adjustment of a mixing ratio of the elastic material to a hard material such as a hard resin, and the like.

The emitter 120 includes an intake portion 131, a regulating unit 135, a discharge portion 137, and a flow path 143. In the emitter 120, for example, the upstream side is a region having the intake portion 131, the downstream side is a region having the regulating unit 135 and the discharge portion 137, and both regions communicate with each other via the flow path 143.

The intake portion 131 is a portion for introducing the liquid in the tube 110 into the emitter 120, and is provided on the front surface 139 side of the emitter 120. When the border between the front surface 139 side of the emitter 120 and the back surface 138 side of the emitter 120 is the base of the emitter 120, as shown in FIGs. 2A, 3A, and 3B, the base of the emitter body 122 has, at its outer edge, a protruded outer wall protruding upward to form an intake recess 153 on the upstream side of the emitter 120. The outer wall of the intake recess 153 has a plurality of slits 154. The base of the emitter 120 includes a first protrusion 157 extending in the longitudinal direction and a plurality of second protrusions 156 extending toward both ends in the lateral direction in the inner region of the intake recess 153. The base of the emitter 120, i.e., the bottom surface of the intake recess 153, has a pair of intake through holes 152 communicating with the back surface 138 side in the longitudinal direction orthogonal to the plurality of second protrusions 156 extending toward both ends in the lateral direction. In the emitter 120, the intake recess 153, the slit 154 of the outer wall, and a protrusion group 155 (first protrusion 157 and second protrusion 156) allow the liquid to flow into the emitter 120 and prevent suspended matters in the liquid from entering and thus are also referred to as a screen portion 151, for example, as will be described below. The screen portion 151 and the pair of intake through holes 152 serve as the intake portion 131 in the emitter 120.

The depth of the intake recess 153 surrounded by the outer wall is not particularly limited, and can be appropriately determined in accordance with the size of the emitter 120, for example.

The shape of the slit 154 in the outer wall is not particularly limited and is preferably in a shape that prevents the suspended matters from entering, as described above. In FIGs. 2A and 3A, the slit 154 has a shape such that the width gradually increases from the outer side surface toward the inner side surface at the outer wall of the intake recess 153. The slit 154 has preferably, for example, such a wedge wire structure. In the case where the slit 154 has the above-described structure, for example, the pressure loss of the liquid flowing into the emitter 120 can be suppressed in the intake recess 153.

The position and number of protrusion groups 155 are not particularly limited and preferably are the position and number that allow the liquid to flow into the emitter 120 and prevent suspended matters in the liquid from entering as described above. The second protrusion 156 has a shape such that the width gradually decreases from the front surface 139 of the emitter body 122 toward the bottom surface of the intake recess 153, for example. That is, it is preferable that the spaces between the adjacent second protrusions 156 of the plurality of second protrusions 156 in the arrangement direction have a so-called wedge wire structure. When the space between the second protrusions 156 has the above-described structure, for example, the pressure loss of the liquid flowing into the intake recess 153 can be suppressed. The distance between the adjacent second protrusions 156 is not particularly limited, and is preferably the distance that allows the above-mentioned function to be exhibited, for example.

For example, similarly to the second protrusion 156, the first protrusion 157 may have a shape such that the width gradually decreases from the front surface 139 of the emitter body 122 toward the bottom surface of the intake recess 153 or may have a shape such that a certain width is kept from the front surface 139 of the emitter body 122 toward the bottom surface of the intake recess 153.

The shape and number of the pair of intake through holes 152 are not particularly limited, and for example, the shape and number that allow the liquid taken into the intake recess 153 via the screen portion 151 to flow into the emitter 120,i.e., the back surface 138 side of the emitter 120. As described above, each of the pair of intake through holes 152 is a long hole provided along the longitudinal direction orthogonal to the second protrusion 156 in the base (bottom surface of the intake recess 153) of the emitter 120. In FIGs. 3A and 3B, while a pair of intake through holes 152 each appear to be a plurality of through holes present along the longitudinal direction because a plurality of second protrusions 156 are present above the long intake through hole 152, the intake through hole 152 is a long hole in the present embodiment as shown in FIG. 2B.

The flow path 143 is a flow path for communicating the intake portion 131 and the regulating unit 135, and is provided on the back surface 138 side of the emitter 120. As shown in FIGs. 2B and 3C, on the back surface 138 side of the emitter 120, the base of the emitter 120 has, at its outer edge, a protruded outer wall protruding upward and has a recess surrounded by the outer wall. The emitter 120 has, on the back surface 138 side, a substantially U-shaped groove 132 along the inner side of the outer wall of the recess and a zigzag-shaped groove 133 along the longitudinal direction passing through the center in the lateral direction. The substantially U-shaped groove 132 is a groove for communicating the pair of intake through holes 152 in the intake portion 131, and the zigzag-shaped groove 133 is a groove for communicating the center of the substantially U-shaped groove 132 and a through hole 161 in the base. In the emitter 120, the groove 132 and the groove 133 serve as the flow path 143. Specifically, when the emitter 120 is disposed in the tube 110, the space between the groove 132 and the groove 133 and the inner wall of the tube 110 serve as the flow path 143. As will be described below, the through hole 161 in the base is a communication hole to the regulating unit 135.

Since the groove 132 is, for example, a connection portion with the intake portion 131, the groove 132 is also referred to as a connection groove 132, and the flow path formed by the connection groove 132 is also referred to as a connection flow path. Since the groove 133 can decompress the pressure of the liquid taken therein while connecting the connection groove 132 and the regulating unit 135 and allowing the liquid to flow from the connection groove 132 to the regulating unit 135, for example, the groove 133 is also referred to as a decompression groove 133, and the flow path formed by the decompression groove 133 is also referred to as a decompression flow path.

The decompression groove 133 is disposed, for example, on the upstream side of the regulating unit 135. The shape of the decompression groove 133 is not particularly limited, and, for example, the shape in plan view may be a zigzag shape as shown in FIG. 2B, a linear shape, or a curved shape. The decompression groove 133 preferably has a zigzag shape, for example, so that the function of decompressing the pressure of the liquid passing through the emitter 120 in use can be exhibited. The decompression groove 133 has, for example, a plurality of protrusions 162 on its inner side surface, and the plurality of protrusions 162 protrude alternately from both side surfaces toward the center along the direction in which the liquid flows. The protrusion 162 has, for example, a substantially triangular prism shape. For example, in plan view, the protrusion 162 is disposed so that the tip thereof does not exceed the central axis of the decompression groove 133.

The regulating unit 135 is a unit that adjusts the discharge amount of the liquid taken into the emitter 120, and is provided on the front surface 139 side of the emitter 120 on the downstream side. As shown in FIGs. 2B, 3B, 3C, and 4A, the base of the emitter 120 has the through hole 161 communicating with the flow path 143 in the vicinity of the center thereof, and has a through hole 174 communicating with the discharge portion 137 on the downstream side thereof. The former through hole 161 may be referred to as a hole for introducing a liquid into a regulating recess 171, and the latter through hole 174 may be referred to as a hole for leading the liquid out of the regulating recess 171. On the front surface 139 side of the emitter 120, the base of the emitter 120 has the regulating recess 171, and the film 124 is fixed in a state of covering the inner space of the regulating recess 171. In the present embodiment, the base is the bottom surface of the regulating recess 171, the bottom surface has the regulating through hole 174 and the lead-out through hole 161, and the bottom surface further includes a protruded regulating cylindrical region 172 protruding toward the front surface 139 side around the upper surface-side opening 172b of the regulating through hole 174. Furthermore, as described above, the film 124 is disposed on the front surface 139 side of the emitter body 122 in a state of covering the inside of the regulating recess 171. In the emitter 120, the regulating recess 171, the regulating cylindrical region 172, the film 124 (diaphragm portion 175), and the regulating through hole 174 serve as the regulating unit 135.

The film 124 only is required to be fixed in a state of covering the inner space of the regulating recess 171, and the fixing position thereof is not particularly limited as described above. In the film 124, a region covering the regulating recess 171 is a diaphragm portion 175. That is, the diaphragm portion 175 covers a region surrounded by the inner edge portion 171a of the upper surface of the side wall of the regulating recess 171. In the emitter 120, the inside of the regulating recess 171 is partitioned from the inside of the tube 110 by the diaphragm portion 175 in the film 124.

The shape of the upper surface-side opening 172b of the regulating through hole 174 is defined by the inner edge of the upper surface of the regulating cylindrical region 172. The inner edge of the upper surface of the regulating cylindrical region 172 is a valve seat portion 172a for the film 124. In use, when no liquid is present in the tube 110, the film 124 covering the regulating recess 171 is not in contact with the valve seat portion 172a of the regulating cylindrical region 172. In the same state, for example, the film 124 may be or may not be in contact with the edge portion 171a of the upper surface-side opening in the regulating recess 171. In use, when the liquid is present in the tube 110, the film 124 deforms so as to come into contact (close contact) with the valve seat portion 172a of the regulating cylindrical region 172 in response to the pressure of the liquid in the tube 110. Specifically, as the pressure of the liquid increases, the film 124 deforms so as to be deflected downward. At this time, the film 124, for example, comes into contact with the edge portion 171a of the upper surface-side opening in the regulating recess 171 and then comes into contact with the valve seat portion 172a of the regulating cylindrical region 172. Therefore, in the vertical direction of the emitter 120, the height of the edge portion 171a forming the upper surface-side opening of the regulating recess 171 is higher than the height of the valve seat portion 172a forming the upper surface-side opening 172b of the regulating through hole 174. It is to be noted that the film 124 may be in contact with the edge portion 171a of the upper surface-side opening of the regulating recess 171 in a state where no liquid is present in the tube 110. Hereinafter, the edge portion 171a of the upper surface-side opening in the regulating recess 171 is also referred to as a support portion.

The shape of the upper surface-side opening 172b of the regulating through hole 174 may satisfy the condition (1). The shape of the upper surface-side opening 172b of the regulating through hole 174 can be defined by, for example, the shape of the valve seat portion 172a. The shapes of the regulating cylindrical region 172 and the valve seat portion 172a are not particularly limited, and can be any shape as long as the upper surface-side opening 172b formed by the valve seat portion 172a satisfies the condition (1). When the upper surface-side opening 172b of the regulating through hole 174 satisfies the condition (1), as described above, even when the film 124 is deflected downward by the pressure of the liquid, the film 124 does not come into contact with the entire circumference of the valve seat portion 172a at the same time, but starts from the partial contact, and finally comes into contact with the entire circumference (excluding the slit 173) by a larger pressure.
Condition (1): In the plane direction perpendicular to the axial direction of the recess, the length (L₁) in one direction passing through the axial center is longer than the length (L₂) in the direction orthogonal to the one direction passing through the axial center.

The axial direction of the regulating recess 171 is the direction perpendicular to the bottom surface thereof and is the vertical direction of the emitter 120. The axial direction of the regulating cylindrical region 172 is the same direction as the axial direction of the regulating recess 171, and is the hollow axial direction of the regulating cylindrical region 172.

In the condition (1), for example, when the length (L₂) is assumed to be 1, the relative value of the length (L₁) is greater than 1, and the ratio (L₁ : L₂) between the length (L₁) and the length (L₂) is, for example, 1.1 to 3 : 1.

The shape of the upper surface-side opening 172b of the regulating through hole 174 may be, for example, a circular shape or a polygonal shape, and the regulating cylindrical region 172 may be, for example, a cylindrical shape or a polygonal cylindrical shape.

When the upper surface-side opening 172b of the regulating through hole 174 has a circular shape, an elliptical shape can be given as a specific example. In this case, for example, the regulating cylindrical region 172 has an elliptical cylindrical shape, and the valve seat portion 172a has an elliptical shape. FIG. 3B shows the regulating cylindrical region 172 in an elliptical cylindrical shape as an example, FIG. 4B shows a partial cross-sectional view taken along the line I-I in FIG. 3A, and FIG. 4C shows a partial cross-sectional view taken along the line II-II in FIG. 3A. The length L₂ shown in FIG. 4B is the length of the short axis of the upper surface-side opening 172b, and the length L₁ shown in FIG. 4C is the length of the long axis of the upper surface-side opening 172b.

The present invention is not limited to this example, and for example, the upper surface-side opening 172b of the regulating through hole 174 may have a polygonal shape, and a rectangular shape can be given as a specific example. In this case, for example, the regulating cylindrical region 172 has a rectangular cylindrical shape, and the valve seat portion 172a has a rectangular shape.

The shape of the upper surface-side opening 172b of the regulating through hole 174 may be defined so as to satisfy the condition (1), for example, in accordance with the shape of the upper surface-side opening of the regulating recess 171. The shape of the upper surface-side opening of the regulating recess 171 is determined by, for example, the shape of the support portion of the regulating recess 171 (edge portion 171a of upper surface-side opening), and defines the diaphragm portion 175 of the film 124. As a specific example, when the shape of the upper surface-side opening of the regulating recess 171 and the shape of the support portion 171a are substantially regular circles, for example, by making the shape of the upper surface-side opening 172b of the regulating through hole 174 elliptical, the upper surface-side opening 172b can satisfy the condition (1). In this case, for example, the valve seat portion 172a has an elliptical shape, and the regulating cylindrical region 172 has an elliptical cylindrical shape. When the shape of the upper surface-side opening of the regulating recess 171 and the shape of the support portion 171a are substantially squares, for example, by making the shape of the upper surface-side opening 172b of the regulating through hole 174 rectangular, the upper surface-side opening 172b can satisfy the condition (1). In this case, for example, the valve seat portion 172a has a rectangular shape, and the regulating cylindrical region 172 has a rectangular cylindrical shape.

As to the condition (1) of the upper surface-side opening 172b of the regulating through hole 174, for example, the shape of the upper surface-side opening of the regulating recess 171 preferably does not satisfy the condition (1).

The regulating cylindrical region 172 has a slit 173 in a part of the upper surface of the protrusion (side wall), and the slit 173 communicates the inside and the outside of the regulating cylindrical region 172. As described above, even when the film 124 comes into contact with the entire circumference of the valve seat portion 172a of the regulating cylindrical region 172 due to the pressure of the liquid in the tube 110, the slit 173 in the side wall of the regulating cylindrical region 172 is not closed by the film 124. Therefore, even when the film 124 comes into contact with the entire circumference of the valve seat portion 172a in the regulating recess 171, the liquid introduced into the regulating cylindrical region 172 via the through hole 161 passes through the regulating through hole 174 via the slit 173, and is sent to the ejection portion 137 to be described below.

The shape of the slit 173 is not particularly limited, and for example, as shown in FIG. 3B, a part of the upper surface of the side wall in the regulating cylindrical region 172 may be deleted from the inner side toward the outer side of the side wall. The size of the slit 173 is not particularly limited, and for example, the depth is 0.1 mm, and the width in the circumferential direction of the side wall is 0.3 mm. The depth of the regulating cylindrical region 172 is not particularly limited, and may be any length as long as greater than the depth of the slit 173, for example.

The discharge portion 137 is a portion for discharging the liquid taken into the emitter 120 via the discharge port 112 of the tube 110, and is provided on the back surface 138 side in the emitter 120. As shown in FIGs. 2B, 3B, and 3C, the base of the emitter body 122 includes a discharge recess 191 on the back surface 138 side and the downstream side of the emitter 120. In the present embodiment, the base is the bottom surface of the discharge recess 191, and the regulating through hole 174 in the regulating unit 135 is provided on the bottom surface of the discharge recess 191 and the upstream side. In the emitter 120, the space of the discharge recess 191 serves as the discharge portion 137. Specifically, when the emitter 120 is disposed in the tube 110 at a site including the discharge port 112, the space between the discharge recess 191 and the inner wall of the tube 110 becomes the discharge portion 137 communicating with the discharge port 112 of the tube 110.

The shape of the discharge recess 191 is not particularly limited, and has a substantially rectangular shape in plan view, for example. For example, as shown in FIGs. 2B and 3C, the discharge recess 191 may include a plurality of protrusions 193 on its bottom surface on the downstream side of the regulating through hole 174 and on the upstream side of a site corresponding to the discharge port 112 of the tube 110. The protrusions 193 are disposed along the width direction. The protrusions 193 allow the liquid to pass therethrough and prevent foreign matters such as suspended matters in the liquid from passing therethrough, for example, as will be described below.

Next, functions of the emitter 120 and the drip irrigation tube 100 in which the emitter 120 is disposed in the tube 110 will be described.

First, an irrigation liquid is fed into the tube 110 of the drip irrigation tube 100. The irrigation liquid is not particularly limited, and examples thereof include water, liquid fertilizer, agricultural chemicals, and mixed liquids thereof. The pressure of the liquid to be fed to the tube 110 is not particularly limited, and, for example, the pressure of the liquid is preferably 0.1 MPa or less in order to perform the drip irrigation method more easily and to further prevent the tube 110 and the emitters 120 from being damaged.

The liquid introduced into the tube 110 is taken into the emitter 120 from the intake portion 131 of the emitter 120. Specifically, in the emitter 120, the liquid enters the intake recess 153 from the slit 154 or the gap between the second protrusions 156, passes through the intake through hole 152, and moves from the front surface 139 side to the back surface 138 side. When the intake portion 131 includes the screen portion 151, for example, suspended matters and the like in the liquid can be removed by the slit 154, the gap between the second protrusions 156, and the like of the screen portion 151. In addition, in the intake portion 131, for example, since the slit 154 and the gap between the second protrusions 156 have the wedge wire structure, it is possible to further suppress the pressure loss of water at the time of taking water into the intake portion 131.

The liquid taken in the intake portion 131 passes through the intake through hole 152 and reaches the connection flow path 132. Then, the liquid flows from the connection flow path 132 into the decompression flow path 133.

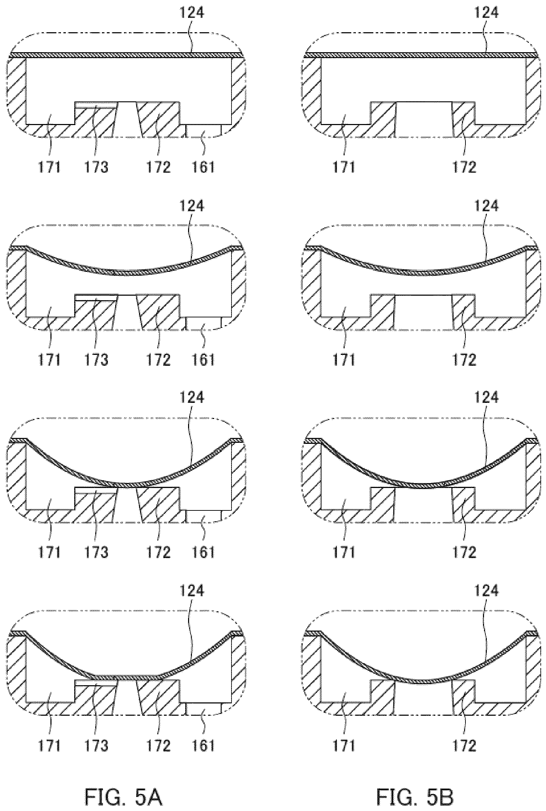

The liquid that has flowed into the decompression flow path 133 passes through the through hole 161 and moves to the regulating unit 135. Specifically, the liquid moves from the through hole 161 to a region between the regulating recess 171 and the regulating cylindrical region 172 in the regulating unit 135. The liquid that has moved to the regulating unit 135 passes through the regulating through hole 174 and moves to the discharge portion 137. At this time, the control of the flow rate of the liquid flowing to the discharge portion 137 by the regulating unit 135 relates to the control of the flow rate of the liquid discharged from the emitter 120 to the outside of the tube 110 via the discharge port 112 of the tube 110. Here, the control of the flow rate in the regulating unit 135, specifically, the control of the flow rate by the first emitter of the present embodiment satisfying the condition (1) will be described with reference to FIGs. 5A and 5B.

FIGs. 5A and 5B are schematic views each showing the relationship between the film 124 which deforms in response to the pressure of the liquid in the tube 110 and the valve seat portion 172a of the regulating cylindrical region 172 in the regulating unit 135 shown in FIG. 4. In the regulating unit 135, the valve seat portion 172a of the regulating cylindrical region 172 has an elliptical annular shape. FIG. 5A shows deformation of the film 124 in the cross-sectional view of FIG. 4B, that is, deformation of the film 124 in the short axis side cross-sectional view at the valve seat portion 172a of the regulating cylindrical region 172. FIG. 5B shows deformation of the film 124 in the cross-sectional view of FIG. 4C, that is, deformation of the film 124 in the long axis side cross-sectional view at the valve seat portion 172a of the regulating cylindrical region 172. In each of FIGs. 5A and 5B, the first diagram shows a state in which the film 124 is not under pressure of the liquid in the tube 110. The second to fourth diagrams show a state in which the pressure applied to the film 124 gradually increases. As shown in the first diagram, the film 124 is not deflected when the film 124 is not under pressure. Next, as shown in the second diagram, when a pressure is applied to the film 124 by the liquid in the tube 110, the film 124 deflects in the downward direction. When a further pressure is applied to the film 124, the film 124 is further deflected to come into contact with the valve seat portion 172a of the regulating cylindrical region 172, as shown in the third diagram of FIG. 5A. However, even when the film 124 comes into contact with the valve seat portion 172a on the short axis side of the regulating cylindrical region 172, with this degree of deformation of the film 124, the film 124 does not come into contact with the valve seat portion 172a on the long axis side of the regulating cylindrical region 172, as shown in the third diagram of FIG. 5B. Therefore, in this state, although the blocking of the regulating cylindrical region 172 by the film 124 is started, due to the contact with a time difference, there is a gap, which is different from the slit 173, between the regulating cylindrical region 172 and the film 124 on the long axis side, and the liquid can pass through the gap. When a further larger pressure is applied to the film 124, the film 124 also comes into contact with the valve seat portion 172a on the long axis side of the regulating cylindrical region 172, and the opening of the regulating cylindrical region 172 is closed except for the slit 173, as shown in the fourth diagram of FIG. 5B.

As a result of intensive research, the inventors of the present invention checked the relationship between the increase in pressure and the discharge amount per hour, and found an event that the discharge amount per hour decreases in a certain pressure range when the pressure is gradually increased. Then, the inventors have found that the reason for the above described event is that the film comes into contact with the entire periphery of the valve seat portion at the same time. That is, when the pressure of the liquid in the tube is sufficiently low and the film is not in contact with the valve seat portion, the upper surface-side opening of the through hole of the recess is not closed, and therefore, even when the pressure is low, a necessary amount of liquid is discharged from the upper surface-side opening to the discharge portion. On the contrary, even when the film is in contact with the valve seat portion due to the pressure of the liquid, if the pressure of the liquid is sufficiently high, a necessary amount of liquid is discharged from the slit to the discharge portion. It is speculated, however, that, in the case where the pressure is not as low as the former and the pressure is not as high as the latter, a phenomenon occurs in which the film comes into contact with the valve seat portion to close the upper surface-side opening of the through hole of the recess, and due to insufficient pressure, a necessary amount of liquid is not discharged from the slit to the discharge portion. Therefore, the inventors conceived the feature of causing the contact of the diaphragm portion of the film to the entire area of the valve seat portion not simultaneously but with a time difference. As a result, it is possible to suppress the influence of the fluctuation of the pressure and maintain a certain discharge amount.

The first emitter according to the present invention achieves the contact with a time difference by setting the shape of the upper surface-side opening of the through hole of the recess so as to satisfy the condition (1). Although the effect of the present invention has been described by taking the first emitter of the present invention as an example, the above described effect is the effect of all of the emitters of the present invention, which is common to the second emitter, the third emitter, the fourth emitter, and the fifth emitter to be described below. In addition, since this effect is an effect obtained by the contact with a time difference as described above, the present invention is not limited to the aspects of the first emitter, the second emitter, the third emitter, the fourth emitter, and the fifth emitter.

The liquid regulated by the regulating unit 135 moves from the regulating unit 135 to the discharge portion 137 via the regulating through hole 174. In the emitter 120, since the discharge portion 137 is disposed at a site corresponding to the discharge port 112 of the tube 110, the liquid that has moved to the discharge portion 137 is discharged to the outside of the tube 110 via the discharge port 112 of the tube 110.

### (Second emitter)

In the second emitter of the present invention, as described above, the shape of the upper surface-side opening of the recess satisfies the following condition (2).
Condition (2): In the plane direction perpendicular to the axial direction of the recess, the length (L₁) in one direction passing through the axial center is longer than the length (L₂) in the direction orthogonal to the one direction passing through the axial center.

The second emitter of the present invention only requires satisfying the condition (2), and other configurations, conditions, and the like are not limited in any way.

An embodiment of the second emitter and the second drip irrigation tube including the same of the present invention will be described with reference to the drawings. The second emitter and the drip irrigation tube of the present invention are not limited or restricted in any way by the embodiment described below. In each of the drawings, identical parts are indicated with identical reference signs. Regarding the second emitter of the present invention, reference can be made to other embodiments of the present invention, unless otherwise stated.

### [Embodiment 2]

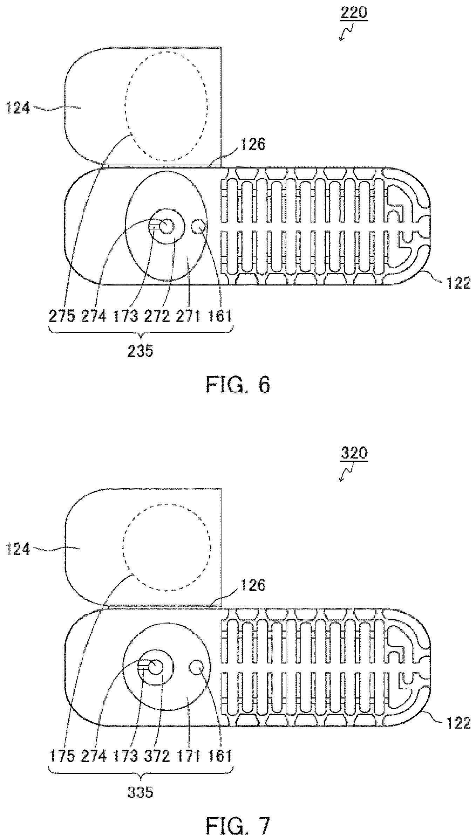

FIG. 6 is a plan view of the emitter 220 seen from the front surface side, and is a schematic view showing a state of the emitter 220 before the film 124 is disposed on the emitter body 122, which is the state in which the film 124 is connected to the emitter body 122 excluding the film 124 via the hinge portion 126, as in FIG. 3B of Embodiment 1.

In the emitter 220 of the present embodiment, the shape of the regulating recess 271 is not particularly limited as long as the shape of the upper surface-side opening in the regulating recess 271 satisfies the condition (2). When the upper surface-side opening of the regulating recess 271 satisfies the condition (2), as described above, even when the film 124 is deflected downward by the pressure of the liquid, the film 124 does not come into contact with the entire circumference of the valve seat portion at the same time, but starts from partial contact, and finally comes into contact with the entire circumference of the valve seat portion (excluding the slit 173) by a larger pressure.

The shape of the upper surface-side opening of the regulating recess 271 may be, for example, a circular shape or a polygonal shape. Since the inner edge of the upper surface-side opening is to be in contact with the film 124, for example, the upper surface-side opening is hereinafter also referred to as a support portion.
Condition (2): In the plane direction perpendicular to the axial direction of the recess, the length (L₁) in one direction passing through the axial center is longer than the length (L₂) in the direction orthogonal to the one direction passing through the axial center.

In the condition (2), for example, when the length (L₂) is assumed to be 1, the relative value of the length (L₁) is greater than 1, and the ratio (L₁ : L₂) between the length (L₁) and the length (L₂) is, for example, 1.1 to 3 : 1.

When the upper surface-side opening (support portion) of the regulating recess 271 has a circular shape, for example, an elliptical shape can be given as a specific example. FIG. 6 shows an elliptical upper surface-side opening of the regulating recess 271 as an example.
Since the diaphragm portion 275 of the film 124 is defined by, for example, the inner edge of the upper surface-side opening of the regulating recess 271, the diaphragm portion 275 has an elliptical shape.

The present invention is not limited to this example. For example, when the upper surface-side opening of the regulating recess 271 has a polygonal shape, the upper surface-side opening is, for example, a rectangle.

The shape of the upper surface-side opening of the regulating recess 271 may be defined so as to satisfy the condition (2) in accordance with the shape of the upper surface-side opening of the regulating through hole 274, for example. As a specific example, when the shape of the upper surface-side opening of the regulating through hole 274 is substantially a regular cyclic shape, for example, the condition (2) can be satisfied by making the shape of the upper surface-side opening of the regulating recess 271 elliptical. When the shape of the upper surface-side opening of the regulating through hole 274 is substantially a square cyclic shape, for example, the condition (2) can be satisfied by making the shape of the upper surface-side opening of the regulating recess 271 rectangular. In this case, as to the condition (2) of the upper surface-side opening of the regulating recess 271, for example, the shape of the upper surface-side opening of the regulating through hole 274 preferably does not satisfy the condition (2).

When the emitter 220 is disposed in the tube 110, the contact of the film 124 with the valve seat portion of a regulating cylindrical region 272 defining the shape of the upper surface-side opening of the regulating through hole 274 has the following relationship, for example. When pressure is applied to the film 124 by the liquid in the tube 110, the film 124 deflects downward. At this time, the inner edge of the upper surface-side opening of the regulating recess 271 serves as the support portion of the film 124. In the present embodiment, since the upper surface-side opening of the regulating recess 271 satisfies the condition (2), specifically, since the upper surface-side opening of the regulating recess 271 is elliptical in FIG. 6, the diaphragm portion 275 of the film 124 has an elliptical shape as described above. Therefore, the diaphragm portion 275 of the film 124 deflects downward in an elliptical shape. When further pressure is applied to the film 124, the diaphragm portion 275 of the film 124 further deflects to come into contact with the valve seat portion of the regulating cylindrical region 272. However, since the diaphragm portion 275 of the film 124 deflects in an elliptical shape, even when the vicinities of both ends on the short axis side of the diaphragm portion 275 come into contact with the valve seat portion of the regulating cylindrical region 272, with this degree of deflection of the film 124, the vicinities of both ends on the long axis side of the diaphragm portion 275 do not come into contact with the valve seat portion of the regulating cylindrical region 272. Therefore, in this state, although the blocking of the upper surface-side opening of the regulating through hole 274 by the film 124 is started, due to the contact with a time difference, there is a gap, which is different from the slit 173, between the valve seat portion of the regulating cylindrical region 272 and the film 124 in the vicinities of both ends on the long axis side of the diaphragm portion 275, and the liquid can pass through the gap. When a further larger pressure is applied to the film 124, the film 124 comes into contact with the valve seat portion of the regulating cylindrical region 272 in the vicinities of both ends on the long axis side of the diaphragm portion 275, and the upper surface-side opening of the regulating through hole is closed except for the slit 173.

The second emitter according to the present invention achieves contact with a time difference by setting the shape of the upper surface-side opening of the regulating recess so as to satisfy the condition (2).

### (Third emitter)

In the third emitter of the present invention, as described above, the upper surface-side opening of the recess and the upper surface-side opening of the through hole satisfy the following condition (3).
Condition (3): In the axial direction of the recess, the center of the upper surface-side opening of the recess and the center of the upper surface-side opening of the through hole are deviated.

The third emitter of the present invention only requires satisfying the condition (3), and other configurations, conditions, and the like are not limited in any way.

An embodiment of the third emitter and the third drip irrigation tube including the same of the present invention will be described with reference to the drawings. The third emitter and the drip irrigation tube of the present invention are not limited or restricted in any way by the embodiment described below. In each of the drawings, identical parts are indicated with identical reference signs. Regarding the third emitter of the present invention, reference can be made to other embodiments of the present invention, unless otherwise stated.

### [Embodiment 3]

FIG. 7 is a plan view of the emitter 320 seen from the front surface side, and is a schematic view showing a state of the emitter 320 before the film 124 is disposed on the emitter body 122, which is the state in which the film 124 is connected to the emitter body 122 excluding the film 124 via the hinge portion 126, as in FIG. 3B of Embodiment 1.

In the emitter 320 of the present embodiment, the shapes of the upper surface-side opening of the regulating recess 171 and the upper surface-side opening of the regulating through hole 274 are not particularly limited as long as the center of the upper surface-side opening of the regulating recess 171 and the center of the upper surface-side opening of the regulating through hole 274 satisfy the condition (3). When the relationship between the centers satisfies the condition (3), as described above, even when the film 124 is deflected downward by the pressure of the liquid, the film 124 does not come into contact with the entire circumference of the valve seat portion of the regulating cylindrical region 372 at the same time, but starts from partial contact, and finally comes into contact with the entire circumference of the valve seat portion (excluding the slit 173) by a larger pressure, thereby blocking the upper surface-side opening of the regulating through hole 274.

The shape of the upper surface-side opening of the regulating recess 171 may be, for example, a circular shape or a polygonal shape. The shape of the upper surface-side opening of the regulating through hole 274 may be, for example, a circular shape or a polygonal shape. In the present embodiment, the shape of the upper surface-side opening in the regulating recess 171 and the shape of the upper surface-side opening of the regulating through hole 274 are not limited in size and are preferably similar in shape, for example.

In the condition (3), the degree of deviation between the center of the upper surface-side opening of the recess and the center of the upper surface-side opening of the regulating through hole 274 is not particularly limited. The distance between the center of the upper surface-side opening of the recess and the center of the upper surface-side opening of the regulating through hole 274 is, for example, 0.1 to 1 mm. The degree of deviation can be set, for example, with reference to the timing at which the diaphragm portion 175 of the film 124 comes into contact with the valve seat portion of the regulating cylindrical region 372. Specifically, the degree of deviation can be set, for example, such that the contact starts at a pressure of about 0.2 Bar and completes the contact with the entire periphery of the valve seat portion at a pressure of about 1.0 Bar.

When the emitter 320 is disposed in the tube 110, the contact of the film 124 with the valve seat portion of the regulating cylindrical region 372 has the following relationship, for example. When pressure is applied to the film 124 by the liquid in the tube 110, the film 124 deflects downward. At this time, the inner edge of the upper surface-side opening of the regulating recess 171 serves as the support portion of the film 124. In the present embodiment, when pressure is applied to the film 124, the film 124 deflects downward from the center of the diaphragm portion 175. When further pressure is applied to the film 124, the diaphragm portion 175 of the film 124 further deflects to come into contact with the valve seat portion of the regulating cylindrical region 372. However, the center of the diaphragm portion 175 of the film 124 and the center of the upper surface-side opening of the regulating through hole 274 surrounded by the valve seat portion of the regulating cylindrical region 372 are deviated from each other. Therefore, even when the diaphragm portion 175 of the film 124 comes into contact with the valve seat portion of the regulating cylindrical region 372 which is close to the center of the diaphragm portion 175, with this degree of deflection of the film 124, the film 124 does not come into contact with the valve seat portion of the regulating cylindrical region 372 which is positioned farther than the center of the diaphragm portion 175. Therefore, in this state, although the blocking of the upper surface-side opening of the regulating through hole 274 by the film 124 is started, due to the contact with a time difference, there is a gap, which is different from the slit 173, between the film 124 and the valve seat portion of the regulating cylindrical region 372 which is positioned farther than the center of the diaphragm portion 175, and the liquid can pass through this gap. When a further larger pressure is applied to the film 124, the diaphragm portion 175 comes into contact with the entire circumference of the valve seat portion of the regulating cylindrical region 372, and the upper surface-side opening of the regulating through hole 274 is closed except for the slit 173.

The third emitter according to the present invention achieves contact with a time difference by setting the center of the upper surface-side opening of the recess and the center of the upper surface-side opening of the through hole so as to satisfy the condition (3).

### (Fourth emitter)

In the fourth emitter of the present invention, as described above, the upper surface-side opening of the recess and the upper surface-side opening of the through hole satisfy the following condition (4).
Condition (4): In the plane direction perpendicular to the axial direction of the recess, the upper surface-side opening of the recess and the upper surface-side opening of the through hole are arranged non-parallel to each other.

The fourth emitter of the present invention only requires satisfying the condition (4), and other configurations, conditions, and the like are not limited in any way.

An embodiment of the fourth emitter and the fourth drip irrigation tube including the same of the present invention will be described with reference to the drawings. The fourth emitter and the drip irrigation tube of the present invention are not limited or restricted in any way by the embodiment described below. In each of the drawings, identical parts are indicated with identical reference signs. Regarding the fourth emitter of the present invention, reference can be made to other embodiments of the present invention, unless otherwise stated.

### [Embodiment 4-1]

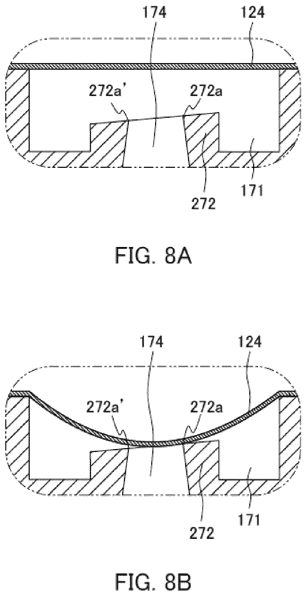

FIG. 8 is a cross-sectional view schematically showing the regulating cylindrical region in the emitter, and is a cross-sectional view in the same direction as FIG. 4C of Embodiment 1.

In the emitter in the present embodiment, the upper surface-side opening of the regulating through hole 174 is arranged non-parallel to the upper surface-side opening of the regulating recess 171. Specifically, the upper surface-side opening of the regulating recess 171 is parallel to the bottom, whereas the upper surface-side opening of the regulating through hole 174 is inclined with respect to the bottom. When the upper surface-side opening of the regulating through hole 174 is inclined, as described above, even when the film 124 is deflected downward by the pressure of the liquid, the film 124 does not come into contact with the entire circumference of the valve seat portion of the regulating cylindrical region 272 at the same time, but starts from partial contact, and finally comes into contact with the entire circumference of the valve seat portion (excluding the slit 173) by a larger pressure.

The upper surface-side opening of the regulating through hole 174 may be inclined with respect to the bottom by setting the heights of the opposing regions (272a, 272a') of the valve seat portion of the regulating cylindrical region 272 different, for example. The degree of inclination of the upper surface-side opening of the regulating through hole 174 can be set by the difference in height between the opposing regions (272a, 272a') of the valve seat portion of the regulating cylindrical region 272, for example. The difference in height between the opposing regions (272a, 272a') is not particularly limited, and the ratio of the height of the highest valve seat portion (e.g., valve seat portion 272a) to the height of the lowest valve seat portion (e.g., valve seat portion 272a') is, for example, 1.1 to 2:1.

When the fourth emitter including the regulating cylindrical region 272 is disposed in the tube 110, the contact of the film 124 with the valve seat portion of the regulating cylindrical region 272 has the following relationship, for example. When pressure is applied to the film 124 by the liquid in the tube 110, the film 124 deflects downward. When further pressure is applied to the film 124, the film 124 further deflects to come into contact with the valve seat portion of the regulating cylindrical region 272. However, since the valve seat portion of the regulating cylindrical region 272 is inclined, with this degree of deflection of the film 124, even when the film 124 comes into contact with one region 272a of the valve seat portion, the film 124 does not come into contact with the opposing region 272a' of the valve seat portion. Therefore, in this state, although the blocking of the regulating cylindrical region 272 by the film 124 is started, due to the contact with a time difference, there is a gap, which is different from the slit 173, between the opposing region 272a' of the valve seat portion and the film 124, and the liquid can pass through this gap. When a further larger pressure is applied to the film 124, the film 124 comes into contact with the entire circumference of the valve seat portion of the regulating cylindrical region 272, and the upper surface-side opening of the regulating through hole 174 is closed except for the slit 173.

### [Embodiment 4-2]

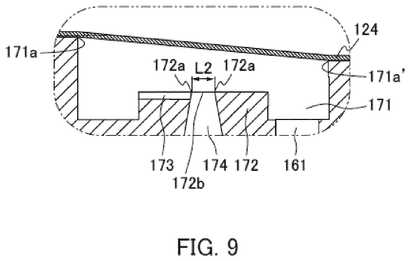

FIG. 9 is a partial cross-sectional view schematically showing the regulating cylindrical region in the emitter, and is a partial cross-sectional view in the same direction as FIG. 4B of Embodiment 1.

In the emitter in the present embodiment, the upper surface-side opening of the regulating recess 171 is arranged non-parallel to the upper surface-side opening of the regulating through hole 174. Specifically, the upper surface-side opening of the regulating through hole 174 is parallel to the bottom, whereas the upper surface-side opening of the regulating recess 171 is inclined with respect to the bottom. When the upper surface-side opening of the regulating recess 171 is inclined, as described above, even when the film 124 is deflected downward by the pressure of the liquid, the film 124 does not come into contact with the entire circumference of the valve seat portion 172a of the regulating cylindrical region 172 at the same time, but starts from partial contact, and finally comes into contact with the entire circumference of the valve seat portion 172a (excluding the slit 173) by a larger pressure.

The upper surface-side opening of the regulating recess 171 may be inclined with respect to the bottom by setting the heights of the opposing regions (171a, 171a') of the support portion of the regulating recess 171 different, for example. The degree of inclination of the upper surface-side opening of the regulating recess 171 can be set by the difference in height between the opposing regions (171a, 171a') of the support portion of the regulating recess 171, for example. The difference in height of the opposing regions (171a, 171a') of the support portion is not particularly limited, and the ratio of the height of the highest support portion (e.g., 171a) to the height of the lowest support portion (e.g., 171a') is, for example, 1.1 to 2 : 1.

When the fourth emitter including the regulating recess 171 is disposed in the tube 110, the contact of the film 124 with the valve seat portion 172a of the regulating cylindrical region 172 has the following relationship, for example. When pressure is applied to the film 124 by the liquid in the tube 110, the film 124 deflects downward. When further pressure is applied to the film 124, the film 124 further deflects to come into contact with the valve seat portion 172a of the regulating cylindrical region 172. However, since the upper surface-side opening of the regulating recess 171 is inclined due to the support portions 171a and 171a', the film 124 deflects in an inclined state. Thus, even when the film 124 at the lower position comes into contact with one region of the valve seat portion 172a, the film at the higher position does not come into contact with the other region (opposing region) of the valve seat portion 172a. Therefore, in this state, although the blocking of the regulating cylindrical region 172 by the film 124 is started, due to the contact with a time difference, there is a gap, which is different from the slit 173, between the opposing region of the valve seat portion 172a and the film 124, and the liquid can pass through this gap. When a further larger pressure is applied to the film 124, the valve seat portion 172a of the regulating cylindrical region 172 comes into contact with the entire circumference, and the upper surface-side opening 172b of the regulating through hole 174 is closed except for the slit 173.

The fourth emitter according to the present invention achieves contact with a time difference by setting the upper surface-side opening of the recess and the valve seat portion in the cylindrical region so as to satisfy the condition (4).

### (Fifth emitter)

In the fifth emitter of the present invention, the bottom surface of the recess does not have the cylindrical region around the upper surface-side opening of the through hole. Specifically, the bottom surface of the recess is flat and the through hole is formed on the bottom surface.

An embodiment of the fifth emitter and the fifth drip irrigation tube including the same of the present invention will be described with reference to the drawings. The fifth emitter and the drip irrigation tube of the present invention are not limited or restricted in any way by the embodiment described below. In each of the drawings, identical parts are indicated with identical reference signs. Regarding the fifth emitter of the present invention, reference can be made to other embodiments of the present invention, except that it does not have the cylindrical region.

### [Embodiment 5]

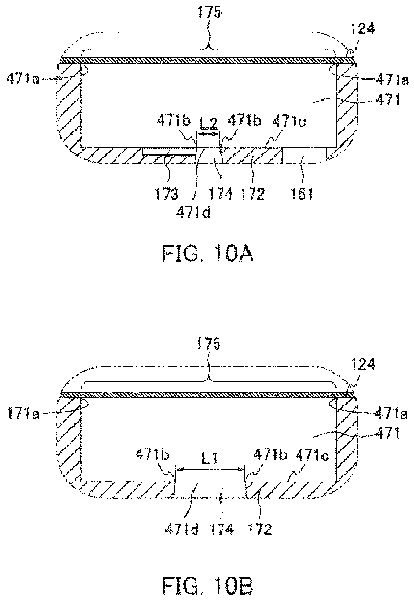

FIGs. 10A and 10B are partial cross-sectional views each schematically showing the fifth emitter, and are partial cross-sectional views in the same direction as FIGs. 4B and 4C of Embodiment 1.

In the emitter of the present embodiment, a bottom surface 471 c of a regulating recess 471 has the regulating through hole 174 and has the slit 173 communicating with the regulating through hole 174. In the bottom surface 471c, an edge portion forming the upper surface-side opening of the regulating through hole 174 serves as a valve seat portion 471b for the film 124, and an inner edge portion on the upper surface of the side wall (protrusion) of the regulating recess 471 serves as a support portion 471a for the film 124.

The present embodiment is the same as the above-described embodiments except that the valve seat portion 471b and the bottom surface 471c of the regulating recess 471 are on the same level. The "valve seat portion in the regulating cylindrical region around the through hole" in the above-described embodiments can be read as the "valve seat portion of the regulating recess" in the present embodiment.

In the emitter of the present invention, whether or not the cylindrical region is provided around the regulating through hole is not particularly limited. The cylindrical region can be used, for example, to adjust the height between the support portion defining the diaphragm portion of the film and the valve seat portion in the recess. That is, the cylindrical region may or may not be provided, for example, in accordance with a desired clearance between the support portion defining the diaphragm portion of the film and the valve seat portion in the recess. As a specific example, when it is desired to relatively delay the timing of pressure correction, for example, the bottom surface of the recess may be formed flat without providing the cylindrical region.

### Examples

Next, examples of the present invention will be described. The present invention, however, is not limited by the following examples.

### Example 1

As the first emitter of the present invention, the emitter 120 shown in FIG. 2 was produced. In the emitter 120, the valve seat portion 172a of the regulating cylindrical region 172 had an elliptical shape. The size of the inner edge of the valve seat portion 172a of the emitter used in Example 1-1 was as follows: the length (L₁) of the longest diameter passing through the center was 1.5 mm, the length (L₂₀) of the shortest diameter orthogonal thereto was 1.0 mm, and the ratio between L₁ and L₂ was 1.5 : 1. The size of the inner edge of the valve seat portion 172a of the emitter used in Example 1-2 was as follows: the length (L₁) of the longest diameter passing through the center was 1.3 mm, the length (L₂₀) of the shortest diameter orthogonal thereto was 1.0 mm, and the ratio between L₁ and L₂ was 1.3 : 1.

As a comparative example, the same emitter as the examples except that the valve seat portion had a regular circular shape and the diameter of the inner edge of the valve seat portion was 1.0 mm was produced.

The emitters of the examples and the emitter of the comparative example differed only in the shapes of the valve seat portions, and each of them had a discharge rate of 1.2 L/Hr at a satisfactory pressure (2 Bar).

Each emitter was connected to a tube having a diameter of 1.6 cm to produce a drip irrigation tube. Then, water was passed through the tube, and the amount of water discharged via each emitter per hour in accordance with the pressure of the water in the tube was checked. The results are shown in FIG. 10.

FIG. 10 is a graph showing the relationship between the pressure of the water in the tube and the discharge amount of the water discharged from the discharge port of the tube per hour. The vertical axis indicates the discharge amount per hour (L/hour), and the horizontal axis indicates the pressure of water in the tube (Bar). As shown in FIG. 10, as to the emitter of the comparative example, when the water is started to flow to the tube, the discharge amount reached 1.2 L/Hr at a pressure of about 0.4 Bar, then the discharge amount decreased in a certain pressure range (0.4 to 1.6 Bar), and thereafter the discharge amount was restored to 1.2 L/Hr at a pressure of about 2 Bar. In contrast, as to the emitters of the examples, even in the pressure range (0.4 to 1.6 Bar) with which the discharge amount of the emitter of the comparative example was decreased, substantial decreases in the discharge amount could be suppressed, and a stable discharge amount could be maintained in the entire pressure range. In particular, as to the emitter of Example 1-1, the discharge amount did not decrease and the discharge amount was stable over the entire pressure range. This shows that the present invention can avoid the influence of the pressure and maintain a stable discharge amount over the entire pressure range.

### Industrial Applicability

According to the present invention, it is possible to suppress the variations in the discharge amount of the liquid caused by the pressure fluctuations of the liquid in the drip irrigation tube. Therefore, for example, even when the drip irrigation is performed at a long distance or the condition of the pressure of the liquid feeding into the tube is changed, it is possible to perform the drip irrigation while suppressing the influence on the discharge amount.

This application claims priority from Japanese Patent Application No. 2017-014745 filed on January 30, 2017. The entire subject matter of the Japanese Patent Application is incorporated herein by reference.

### Reference Signs List

- 100:: drip irrigation tube
- 110:: tube
- 112:: discharge port
- 120, 220, 320:: emitter
- 122:: emitter body
- 124:: film
- 126:: hinge portion
- 131:: intake portion
- 132, 133:: groove
- 135, 335:: regulating unit
- 137:: discharge portion
- 138:: back surface
- 139:: front surface
- 143:: flow path
- 151:: intake screen portion
- 152:: intake through hole
- 153:: intake recess
- 154:: slit
- 155:: protrusion
- 156:: second protrusion
- 157:: first protrusion
- 161:: through hole
- 162:: protrusion
- 171, 271, 471:: regulating recess
- 171a, 171a', 471a:: support portion (edge portion)
- 172, 272, 372: regulating cylindrical region
- 172a, 272a, 272a', 471b:: valve seat portion
- 172b, 471d:: upper surface-side opening of through hole
- 173:: slit
- 174, 274:: through hole
- 175, 275:: diaphragm portion
- 191:: discharge recess
- 193:: protrusion
- 471c:: bottom surface

## Claims

1. An emitter to be disposed on an inner wall of a tube including a discharge port, for regulating discharge of irrigation liquid from an inside of the tube to an outside of the tube via the discharge port, comprising:
an intake portion for taking in the liquid in the tube;
a regulating unit that regulates a discharge amount of the liquid taken in;
a discharge portion for discharging the taken-in liquid via the discharge port of the tube; and
a flow path communicating the intake portion and the regulating unit, wherein
the regulating unit comprises:
a recess; and
a film,
the film is fixed in a state of covering an inner space of the recess,
a region of the film covering the inner space of the recess is a diaphragm portion,
the recess has a through hole on its bottom surface,
the through hole of the recess communicates with the discharge portion,
the recess has a slit communicating with the through hole on its bottom surface,
an edge portion forming an upper surface-side opening of the through hole on the bottom surface of the recess, excluding the slit, is a valve seat portion for the film;
in a state where the emitter is disposed in the tube,
when no liquid is present in the tube, the diaphragm portion of the film is not in contact with the valve seat portion, and
when the liquid is present in the tube, the diaphragm portion of the film can be in contact with the valve seat portion in accordance with a pressure of the liquid; and
the diaphragm portion of the film comes into contact with an entire valve seat portion with a time difference.

2. The emitter according to claim 1, wherein
a shape of the upper surface-side opening of the through hole satisfies the following condition (1):
Condition (1): In a plane direction perpendicular to an axial direction of the recess, a length (L₁) in one direction passing through an axial center is longer than a length (L₂) in a direction orthogonal to the one direction passing through the axial center.

3. The emitter according to claim 2, wherein
the shape of the upper surface-side opening of the recess does not satisfy the condition (1).

4. The emitter according to claim 2 or 3, wherein
in the condition (1), when the length (L₂) is assumed to be 1, a relative value of the length (L₁) is greater than 1 and is equal to or less than 3.

5. The emitter according to any one of claims 2 to 4, wherein
the shape of the upper surface-side opening of the through hole is an ellipse.

6. The emitter according to claim 1, wherein
a shape of the upper surface-side opening of the recess satisfies the following condition (2):
Condition (2): In a plane direction perpendicular to an axial direction of the recess, a length (L₁) in one direction passing through an axial center is longer than a length (L₂) in a direction orthogonal to the one direction passing through the axial center.

7. The emitter according to claim 6, wherein
the shape of the upper surface-side opening of the through hole does not satisfy the condition (2).

8. The emitter according to claim 6 or 7, wherein
in the condition (2), when the length (L₂) is assumed to be 1, a relative value of the length (L₁) is greater than 1 and is equal to or less than 3.

9. The emitter according to any one of claims 6 to 8, wherein
the shape of the upper surface-side opening of the recess is an ellipse.

10. The emitter according to claim 1, wherein
the upper surface-side opening of the recess and the upper surface-side opening of the through hole satisfy the following condition (3):
Condition (3): In an axial direction of the recess, a center of the upper surface-side opening of the recess and a center of the upper surface-side opening of the through hole are deviated.

11. The emitter according to claim 1, wherein
the upper surface-side opening of the recess and the upper surface-side opening of the through hole satisfy the following condition (4):
Condition (4): In a plane direction perpendicular to an axial direction of the recess, the upper surface-side opening of the recess and the upper surface-side opening of the through hole are arranged non-parallel to each other.

12. The emitter according to claim 11, wherein
the upper surface-side opening of the through hole is inclined.

13. The emitter according to claim 11, wherein
the upper surface-side opening of the recess is inclined.

14. A drip irrigation tube comprising:
a tube; and
an emitter, wherein
the emitter is the emitter according to any one of claims 1 to 13,
the tube includes a discharge port for discharging an irrigation liquid,
the emitter is disposed on an inner wall of the tube at a site including the discharge port, and
the discharge portion of the emitter and the discharge port of the tube correspond to each other.
